# EUROPEAN PATENT APPLICATION

(11) **EP 0 599 533 A1**
(43) Date of publication of application: **01.06.1994**
(21) Application number: 93309149.8
(22) Date of filing: 16.11.1993
(51) Int. Cl.: F16J 15/32

(54) **Annular seals**

(30) Priority: 24.11.1992 GB 9224611
(71) Applicant: DOWTY SEALS LIMITED, Tewkesbury Gloucestershire GL20 8JS (GB)
(72) Inventor: Everett, Richard Mervyn, Badger Bank, Cheltenham, Gloucestershire, GL52 4QL (GB)
(74) Representative: Hogg, Jeffery Keith

(57) **Abstract**

An annular seal comprises a carrier (1) having a pair of concentric annular members (4,6) which cooperate axially to grip an annular edge portion of a sealing ring (2), and which are held together axially by radially projecting interlocking formations (9,10) that automatically cooperate during assembly, one or both of said annular members (4,6) being resilient to allow such cooperation. Axially directed faces (7,8) of the annular members (4,6) grip the sealing ring (2) and may be adapted for extra grip. The annular members (4,6) may grip the outer edge portion of the sealing ring (2). One annular member (6) within the other annular member (4) may be formed into a radially outwardly projecting interlocking formation (9), and may be symmetrical about a central radial plane.

## Description

### Technical Field

This invention relates to annular seals such as rotary shaft seals.

Rotary shaft seals are commonly known in which an annular sealing element is secured at its outer edge to a carrier and engages the shaft at its inner edge. The outer edge of the sealing element may be clamped between components of the carrier which are assembled in compression, or may be received in a channel in the carrier which is partially closed by crimping to grip the sealing element. The carrier generally consists of metal components which are deformed in the assembly process.

### Disclosure of the Invention

An object of the present invention is to provide a rotary shaft seal in which the sealing element is held in an improved manner.

This is achieved according to the invention by providing an annular seal comprising a carrier and a sealing ring secured to the carrier so as to extend therefrom and form a seal towards its free end with a relatively rotatable member, characterised in that the carrier comprises a pair of annular members, one axially insertable within the other to cooperate and retain an annular edge portion of the sealing ring therebetween, said pair of annular members being formed with radially projecting interlocking formations which automatically cooperate to retain said pair of annular member together axially once inserted one within the other, one or both of said pair of annular members being resilient to allow cooperation of said formations and to retain them axially in an interlocked condition.

Preferably, the annular edge portion of the sealing ring is directed radially and is retained between respective axially directed faces of the annular members.

Preferably, those faces of the annular members that cooperate with the annular edge portion of the sealing ring are adapted to grip the latter and hold it more firmly against withdrawal. For example, one or both faces are formed with gripping teeth or one or more tapered retaining surfaces.

Preferably, the sealing ring is a radial fit with one annular member, and engages an axially directed face formed on a radial shoulder of that annular member, and the other annular member is a radial fit with said one annular member, and has an axially directed face at one end that engages the sealing ring.

Preferably, said other annular member is symmetrical about a central radial plane through the interlocking formations so that it can be assembled with either of opposite axially inserted faces engaging the sealing ring.

The interlocking formations preferably comprise one or more projections on one annular member that engage in one or more respective recesses in the other annular member, one or both annular members being composed of resilient material to allow radial flexing of these members as one as is inserted into the other during assembly. Preferably, the projections are cam shaped and the recesses are a complementary shape.

In the case of the seal with the sealing ring supported at its outer edge and projecting radially inwards to a free inner end, the sealing ring is received axially within one outer annular member to abut an inner shoulder, and a second annular member is inserted axially into the outer annular member so that an end thereof engages the outer edge of the sealing ring and holds it against the shoulder of the outer annular member. Preferably, the interlocking formations comprise projections on the outer surface of the inner annular member which cooperates with recesses in the inner surface of the outer annular member.

### Description of the Drawings

The invention will now be described by way of example with reference to the accompanying drawings in which:-
Figure 1 is a longitudinal cross-section through an annular seal according to the invention, and
Figure 2 is part of a longitudinal cross-section showing a modification to the seal of Figure 1.

### Mode of carrying out the invention

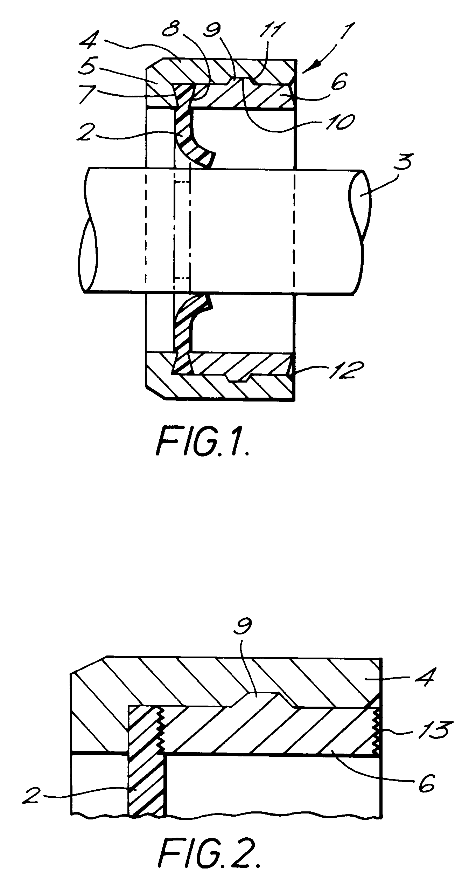

The seal illustrated in Figure 1 comprises a ring-shaped outer carrier 1 that supports a resilient sealing ring 2 by its outer edge so that the sealing ring projects radially inwards to form a seal at its inner edge when assembled on a rotary shaft 3.

The carrier 1 comprises an outer cylindrical member 4 which is formed with a radially inwardly projecting shoulder 5 at one end, and an inner cylindrical carrier member 6 which is a push fit within the outer member 4. The outer edge of the sealing ring 2 is gripped between the inner axially directed face 7 of the shoulder 5 and the adjacent axial end face 8 of the inner member 6.

Interlocking formations formed on the cylindrical interfaces of the carrier members 4 and 6 cooperate to retain these members together axially in the locked condition illustrated in Figure 1. These formations comprise an annular projection 9 on the outer surface of the inner member 6, and a corresponding annular recess 10 in the inner surface of the outer member 4. These members 4 and 6 are composed of resilient plastics material so as to allow radial flexing of the outer member 4 as the inner member 6 and projection 9 are inserted therein. A tapered or cam-shaped shoulder 11 on the projection 9 assist insertion of the projection into the outer member 4, the shoulder 11 cooperating with a chamfer 12 on the inner edge of the outer member 4.

The inner member 6 and projection 9 are symmetrical about a central radial plane so that it can be inserted either end first into the outer member 4.

The faces 7 and 8 of the members 4 and 6 that grip the outer edge of the sealing ring 2 are adapted to retain the sealing ring more securely against withdrawal. As shown in Figure 1, these faces 7 and 8 are tapered inwardly towards one another. However, an alternative arrangement is illustrated in Figure 2 in which circumferential serrations 13 are formed on the end faces 8 of the inner member.

The relative axial dimensions of the carrier members 4 and 6 are such that when assembled in the locked condition, the adjacent ends remote from the shoulder 5 lie flush in the same radial plane. This arrangement facilitates assembly using a flat tool or platen to push the inner member 4 into the outer member 6.

It will be appreciated that a seal according to the invention can be simply and reliably assembled without involving any metal forming processes such as conventionally used in seals of this kind. The carrier is an all-plastics construction which lends itself to reduce cost manufacturing processes, such as injection moulding, and, by suitable choice of the plastics materials used, allows weight reduction, improved corrosion resistance and compatible coefficience of thermal expansion.

## Claims

1. An annular seal comprising a carrier (1) and a sealing ring (2) secured to the carrier (1) so as to extend therefrom and form a seal towards its free end with a relatively rotatable member (3), characterised in that the carrier comprises a pair of annular members (4,6), one (6) axially insertable within the other (4) to cooperate and retain an annular edge portion of the sealing ring (2) therebetween, said pair of annular members (4,6) being formed with radially projecting interlocking formations (9,10) which automatically cooperate to retain said pair of annular members (4,6) together axially once inserted one within the other, one or both of said pair of annular members (4,6) being resilient to allow cooperation of said formations (9,10) and to retain them axially in an interlocked condition.

2. An annular seal as claimed in claim 1 in which the annular edge portion of the sealing ring (2) is directed radially and is retained between respective axially directed faces (7,8) of the annular members (4,6).

3. An annular seal as claimed in claim 2 in which faces (7,8) of the annular members (4,6) that cooperate with the annular edge portion of the sealing ring (2) are adapted to grip the latter and hold it more firmly against withdrawal.

4. An annular seal as claimed in claim 3 in which one or both faces (7,8) of the annular members (4,6) that cooperate with the annular edge portion of the sealing ring (2) are formed with gripping teeth or one or more tapered retaining surfaces.

5. An annular seal as claimed in claim 3 in which one or both faces (7,8) of the annular members (4,6) that cooperate with the annular edge portion of the sealing ring (2) are formed with a tapered retaining surface.

6. An annular seal as claimed in any preceding claim in which the sealing ring (2) is a radial fit with one annular member (4), and engages an axially directed face (7) formed on a radial shoulder (5) of that annular member, and the other annular member (6) is a radial fit with said one annular member (4), and has an axially directed face (8) at one end that engages the sealing ring (2).

7. An annular seal as claimed in claim 6 in which said other annular member (6) is symmetrical about a central radial plane through the interlocking formations (9,10) so that it can be assembled with either of opposite axially inserted faces engaging the sealing ring (2).

8. An annular seal as claimed in any preceding claim in which the interlocking formations (9,10) comprise one or more projections (9) on one annular member (6) that engage in one or more respective recesses (10) in the other annular member (4), one or both annular members (4,6) being composed of resilient material to allow radial flexing of these members as one as is inserted into the other during assembly.

9. An annular seal as claimed in claim 8 in which each projection (9) is cam shaped and each recess (10) is a complementary shape.

10. An annular seal as claimed in claim 6 or 7 in which the sealing ring (2) is supported at its outer edge and projects radially inwards to a free inner end, the sealing ring (2) being received axially within one outer annular member (4) to abut an inner shoulder (5), and the other annular member (6) is inserted axially into the outer annular member (4) so that an end (8) thereof engages the outer edge of the sealing ring (2) and holds it against the shoulder (5) of the outer annular member (4).

11. An annular seal as claimed in claim 10 in which the interlocking formations (9,10) comprise one or more projections (9) on the outer surface of the inner annular member (6) which cooperates with one or more recesses (10) in the inner surface of the outer annular member (4).
